# EUROPEAN PATENT SPECIFICATION

(11) **EP 2 862 634 B1**
(45) Date of publication and mention of the grant of the patent: **19.04.2017**
(21) Application number: 13806574.3
(22) Date of filing: 17.06.2013
(51) Int. Cl.: B05D 7/14, B05D 7/24, B32B 15/08, B32B 15/082, F28F 1/32, C09D 4/00, C09D 129/04, C09D 133/02, C09D 133/24, C09D 171/00

(54) **METHOD FOR COVERING ALUMINUM FIN MATERIAL WITH HYDROPHILIC FILM, ALUMINUM FIN MATERIAL, AND ALUMINUM HEAT EXCHANGER**
VERFAHREN ZUR ABDECKUNG EINES ALUMINIUMRIPPENMATERIALS MIT EINER HYDROPHILEN FOLIE, ALUMINIUMRIPPENMATERIAL UND ALUMINIUMWÄRMETAUSCHER
PROCÉDÉ POUR COUVRIR UN MATÉRIAU D'AILETTE ALUMINIUM AVEC UN FILM HYDROPHILE, MATÉRIAU D'AILETTE ALUMINIUM, ET ÉCHANGEUR THERMIQUE EN ALUMINIUM

(30) Priority: 19.06.2012 JP 2012137961
(43) Date of publication of application: 22.04.2015
(73) Proprietor: UACJ Corporation, Tokyo 100-0004 (JP)
(72) Inventor: SAKATA, Yosuke, Tokyo 140-8675 (JP); ASAKURA, Ryo, Tokyo 140-8675 (JP); HIRASAWA, Hidekimi, Tokyo 140-8675 (JP); MIZUTA, Yoshihiko, Chiyoda-ku Tokyo 100-0004 (JP); USAMI, Tsutomu, Chiyoda-ku Tokyo 100-0004 (JP); ISOMURA, Norihisa, Chiyoda-ku Tokyo 100-0004 (JP)
(74) Representative: Herzog, Fiesser & Partner Patentanwälte PartG mbB
(86) International application number: PCT/JP2013/066636
(87) International publication number: WO 2013/191149

(56) References cited:
- JP-A- H08 120 003
- JP-A- H09 316 434
- JP-A- H09 316 434
- JP-A- 2005 002 151
- JP-A- 2005 002 151

## Description

### TECHNICAL FIELD

The present invention relates to a method for covering an aluminum fin material with a hydrophilic film, an aluminum fin material and an aluminum heat exchanger.

### BACKGROUND ART

Aluminum and alloys thereof have been used for a variety of applications because they are lightweight and have excellent processability and thermal conductivity. For example, an aluminum-made heat exchanger has been known.

With regard to a fin of a heat exchanger in an air conditioner and the like, moisture in the air may adhere to a surface of the fin as condensed water during cooling operation, and the resulting water droplets may sometimes cause cloggings. These cloggings may increase the ventilation resistance and may decrease the exchange efficiency of the heat exchanger, as well as may cause problems such as noise generation, pollution due to scattering of water droplets and the like. In order to prevent the occurrence of such problems, a hydrophilization treatment on a surface of the fin has conventionally been conducted.

In addition, in recent years, as required performance for the hydrophilization treatment, durability of hydrophilicity when a contaminant adheres to the surface has become increasingly important. This is because there are contaminants such as lubricants for plastics including palmitic acid, stearic acid, paraffin acid and the like, as well as diisooctyl phthalate and the like as a variety of substances suspended in a room in an environment in which an air conditioner and the like are used, and these contaminants may significantly impair hydrophilicity of a hydrophilic film by adhering to the surface of the fin.

As a hydrophilization treatment agent, a polymer composition for hydrophilization treatment which comprises a high molecule such as a polyacrylic acid polymer, and another high molecule which binds to this high molecule by hydrogen bonding such as polyethylene oxide has been proposed (for example, see Patent Document 1). This is a technique which improves the durability of hydrophilicity of a hydrophilic film, but it is insufficient in terms of suppression of decrease in the above-described hydrophilicity depending on types of contaminants which adhere to the film. Further, it is insufficient in terms of adhesion between a metal surface and the hydrophilic film in a state that water adheres to the film.

Further, a hydrophilization treatment agent including a salt of carboxymethyl cellulose, N-methylolacrylamide, polyacrylic acid and polyethylene oxide, as well as, a hydrophilization treatment agent including an aqueous polymer compound containing a polyoxyalkylene chain, an aqueous resin and N-methylolacrylamide have been proposed (for example, see Patent Documents 2 and 3). In these techniques, N-methylolacrylamide is contained as a monomer, and therefore, they were insufficient in terms of the above-described durability in case that a contaminant adheres to the surface.

Furthermore, crosslinkable fine particles obtainable from a monoethylenic monomer having a polyoxyalkylene chain, a (meth)acrylamide-based monoethylenic monomer, a crosslinkable unsaturated monomer having an N-methylol group and a polymerizable double bond such as N-methylolacrylamide and another monomer have been proposed (for example, see Patent Documents 4 to 6). In particular, by admixing specific crosslinkable fine particles to a hydrophilization treatment agent, durability of hydrophilicity can be sufficiently increased after a contaminant adheres and adhesion between a hydrophilic film in a state that water adheres to the film and a metal surface can be sufficiently improved (see Patent Document 7).
Patent Document 1: Japanese Unexamined Patent Application, Publication No. H06-322292
Patent Document 2: Japanese Unexamined Patent Application, Publication No. H06-322552
Patent Document 3: Japanese Unexamined Patent Application, Publication No. H07-102189
Patent Document 4: Japanese Unexamined Patent Application, Publication No. H08-120003
Patent Document 5: Japanese Unexamined Patent Application, Publication No. 2000-248225
Patent Document 6: Japanese Unexamined Patent Application, Publication No. 2002-302644
Patent Document 7: Japanese Unexamined Patent Application, Publication No. 2005-2151

### DISCLOSURE OF THE INVENTION

### Problems to be Solved by the Invention

As described above, by using the hydrophilization treatment agent described in Patent Document 7, the hydrophilic film formed on the metal surface exhibits excellent adhesion to the metal surface in a state that water adheres to the hydrophilic film and exhibits excellent durability of hydrophilicity in a state that a contaminant adheres to the hydrophilic film.

However, when a metal material on the surface of which a hydrophilic film is formed by using a conventional hydrophilization treatment agent is used for a heat exchanger, there has been a problem of generation of odors.

The present invention was accomplished in view of the above-described problems, and an object of the present invention is to provide a method for surface treatment of a heat exchanger, capable of forming a hydrophilic film which exhibits excellent adhesion to a metal surface in a state that water adheres to the hydrophilic film and which exhibits excellent durability of hydrophilicity in a state that a contaminant adheres to the hydrophilic film and which does not emit a problematic odor when used in a heat exchanger; an aluminum fin material which is obtained by forming a hydrophilic film on the surface of an aluminum fin by this method; and an aluminum heat exchanger using the aluminum fin material.

### Means for Solving the Problems

The present inventors found that the cause of odors is release of acid components contained in a trace amount in the air after being condensed by being adhered to a hydrophilic film. Further, the present inventors found that the above-described object can be achieved by covering a metal surface with a hydrophilic film formed by using a hydrophilization treatment agent including hydrophilic resins and crosslinkable fine particles (D), in which as the hydrophilic resins, a specific (meth)acrylic resin (A), polyvinyl alcohol (B), and at least one resin (C) selected from polyethylene oxide and polyethylene glycol are used, and thus completed the present invention. More specifically, the present invention provides the followings.

In order to achieve the above-described object, the present invention provides:
a method for covering an aluminum fin material with a hydrophilic film that is a method for surface treatment of an aluminum heat exchanger), including:
   bringing a surface of the aluminum fin material used for the aluminum heat exchanger into contact with a chemical conversion treatment agent to form a chemical conversion film; and
   bringing thus obtained chemical conversion film into contact with a hydrophilization treatment agent to form the hydrophilic film, in which,
   the hydrophilization treatment agent includes:
      a (meth)acrylic resin (A) including a repeating unit derived from an acrylic acid monomer and/or a repeating unit derived from a methacrylic acid monomer;
      polyvinyl alcohol (B);
      at least one resin selected from polyethylene oxide and polyethylene glycol (C); and crosslinkable fine particles (D), in which,
      the (meth)acrylic resin (A):
         (1) does not include a repeating unit derived from a monomer having a sulfo group or a repeating unit derived from a monomer having an amide group;
         (2) has a weight average molecular weight of 20,000 - 2,000,000; and
         (3) has an acid value of the solid component of the resin of 100 - 800 mgKOH/g, in which,
      the crosslinkable fine particles (D) are obtained by copolymerizing 30 - 95 mass% of a monomer (a) represented by the following formula (I), 5 - 60 mass% of a monomer (b) having a polyoxyalkylene chain and a polymerizable double bond, and 0 - 50 mass% of another polymerizable monomer (c), 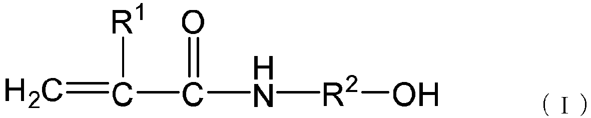
         (in which, R¹ represents a hydrogen atom or a methyl group,
         R² represents CH₂ or C₂H₄) in which,
      a content rate of a solid component of the (meth)acrylic resin (A) is 2 - 7 mass%, a content rate of a solid component of the polyvinyl alcohol (B) is 10 - 40 mass%, at least one resin selected from polyethylene oxide and polyethylene glycol (C) is 10 - 50 mass%, and crosslinkable fine particles (D) are 30 - 50 mass%, in the solid component of the hydrophilization treatment agent, and in which,
      a content rate of asolid component of an unsaturated polymerizable compound (E) having at least one functional group selected from a hydroxy group and an amide group is 0 - 10 mass%, in the solid component of the hydrophilization treatment agent.

The present invention also provides an aluminum fin material obtainable by forming a hydrophilic film on its surface according to the method for covering the aluminum fin material with the hydrophilic film of the present invention.

The present invention further provides an aluminum heat exchanger obtainable by using the aluminum fin material according to the present invention.

### Effects of the Invention

The hydrophilic film formed on the metal surface by using the hydrophilization treatment agent according to the present invention exhibits excellent adhesion to the metal surface in a state that water adheres to the hydrophilic film, and exhibits excellent durability of hydrophilicity in a state that a contaminant adheres to the hydrophilic film, and does not emit a problematic odor when being contacted with the air.

### PREFERRED MODE FOR CARRYING OUT THE INVENTION

Hereinafter, embodiments of the present invention will be described. The present invention is not limited to the following embodiments.

### Aluminum Fin Material

An aluminum coil on which the hydrophilization treatment agent used for the present invention is applied is subjected to specific processing to construct a fin.

A method for forming a hydrophilic film by using the hydrophilization treatment agent is not particularly limited, and for example, a method which comprises degreasing the aluminum coil, and then conducting chemical conversion treatment by phosphoric chromate, and then applying the above-described hydrophilization treatment agent on the aluminum coil according to a roll coater method, and heat drying the coil to form the hydrophilic film may be employed.

Generally, hydrophilicity and corrosion resistance are required for the surface of the aluminum fin material, however the more excellent in the hydrophilicity of a film is, the less excellent in corrosion resistance of the film is, in general. Therefore, there is no problem for the aluminum fin material according to the present invention at all, if surface treatment imparting corrosion resistance is conducted by primer treatment with an organic resin before forming the hydrophilic film and after the chemical conversion treatment in order to form a corrosion resistant film as an undercoat.

"Aluminum" is a general term for metals and alloys including mostly of aluminum and has a concept where pure aluminum and aluminum alloys are included.

In the heat exchanger, a plurality of fins are disposed at a narrow interval and tubes for supplying a refrigerant are disposed at these fins in a complicated manner in order to maximize a surface area from the viewpoint of improvement in heat exchange efficiency.

### Aluminum Heat Exchanger

The heat exchanger according to the present invention is configured with a cross fin tubeformed by integrally assembling the above-described refrigerant tubes and the above-described fin materials by inserting refrigerant tubes made of a copper alloy into cylindrical collar portions provided in the aluminum fin material.

The above-described fin material is created by press working of a fin material for a heat exchanger formed of an aluminum plate to make openings for assembly which have fin collar portions with a height of about 1 - 4 mm for the insertion and fixation of the above-described tubes. Next, thus obtained fin materials are stacked and then, the tubes separately created are inserted within the above-described openings for assembly. As tubes, generally, copper tubes or copper alloy tubes are employed and they are subjected to processing for providing grooves on their interior sides by component rolling and then are subjected to standard size cutting · hairpin bending processing. Next, tubes are fixed to the aluminum plate fin materials by expanding the tubes outward to bring the tubes into a forced fit contact with the fins, and then brazing the end parts of the tubes which are opposite to the sides subjected to the hairpin bending processing with U-bend tubes to yield the heat exchanger.

It is noted that the above-described "copper alloy" is a general term for metals and alloys including mostly of copper and has a concept where pure copper and copper alloys are included.

### Method for Surface Treatment of Heat Exchanger

In the method for surface treatment according to the present invention, a specific hydrophilization treatment agent is used. The specific hydrophilization treatment agent contains specific hydrophilic resins and specific crosslinkable fine particles at a specific ratio.

By containing these components in the hydrophilization treatment agent, a hydrophilic film formed on a metal surface by using the hydrophilization treatment agent tends not to adhere to acid components in the air, and as a result, odors generated by release of acid components which are adhered to the surface and are condensed can be suppressed. In addition, by containing these components in the hydrophilization treatment agent, a hydrophilic film formed on a metal surface by using the hydrophilization treatment agent according to the present invention exhibits excellent adhesion to a metal surface in a state that water adheres to the film and exhibits excellent durability of hydrophilicity in a state that a contaminant adheres to the film.

### [Hydrophilic Resins]

The hydrophilic resins according to the present invention essentially contain, a (meth)acrylic resin (A) containing a repeating unit derived from an acrylic acid monomer and/or a repeating unit derived from a methacrylic acid monomer; polyvinyl alcohol (B); and, at least one resin (C) selected from polyethylene oxide and polyethylene glycol.

The (meth)acrylic resin (A) contains a repeating unit derived from at least one monomer selected from an acrylic acid monomer and a methacrylic acid monomer. The total content of the repeating unit derived from an acrylic acid monomer and the repeating unit derived from a methacrylic acid monomer is not particularly limited, but it is preferable that the total content is 50 - 100 mass%.

The (meth)acrylic resin (A) may contain a repeating unit other than the repeating unit derived from an acrylic acid monomer and the repeating unit derived from a methacrylic acid monomer. For example, the (meth)acrylic resin (A) may contain a derivative of an acrylic acid monomer or a methacrylic acid monomer.

Specifically, examples of a monomer which has one polymerizable unsaturated bond in a molecule include: an alkyl methacrylate such as methyl methacrylate, n-butyl methacrylate, i-butyl methacrylate, 2-ethylhexyl methacrylate, isononyl methacrylate, n-octyl methacrylate, lauryl methacrylate, stearyl methacrylate and the like; an alkyl acrylate such as methyl acrylate, n-butyl acrylate, i-butyl acrylate, 2-ethylhexyl acrylate, isononyl acrylate, n-octyl acrylate; an aralkyl methacrylate such as benzyl methacrylate and the like;
an aralkyl acrylate such as benzyl acrylate and the like; an alkoxyalkyl methacrylate such as butoxyethyl methacrylate; an alkoxyalkyl acrylate such as butoxyethyl acrylate.

They may be used alone, or in combination of two or more.

In addition, the (meth)acrylic resin (A) may contain components other than the above-described monomers, however it does not contain a repeating unit derived from a monomer having a sulfo group or a repeating unit derived from a monomer having an amide group. When the (meth)acrylic resin (A) contains these above, the problem of odors cannot be suppressed.

A content rate of the solid component of the (meth)acrylic resin (A) in the total solid component of the hydrophilization treatment agent is 2 - 7 mass%. When the content rate of the solid component of the (meth)acrylic resin (A) is less than 2%, adhesion between the hydrophilic film and the metal surface tends to be decreased. When the content rate of the solid component of the (meth)acrylic resin (A) exceeds 7%, the hydrophilic film tends to adhere to acid components in the air and odor resistance tends to be decreased. When the content rate of the solid component of the (meth)acrylic resin (A) is in the above-described range, it is possible to make almost all the (meth)acrylic resin (A) exist in a boundary to the metal surface and to make the (meth)acrylic resin (A) not exist in the surface side of the hydrophilic film. As a result, carboxyl groups on the (meth)acrylic resin (A) adhere to acid components in the air and can prevent the acid components in the air from being condensed. A preferable range of the content of the solid component of the (meth)acrylic resin (A) is 3 - 5 mass%.

An acid value of the (meth)acrylic resin (A) is 100 - 800 mgKOH/g. When the acid value of the (meth)acrylic resin (A) is less than 100 mgKOH/g, adhesion between the hydrophilic film and the metal surface tends to be decreased. When the acid value of the (meth)acrylic resin (A) exceeds 800 mgKOH/g, the hydrophilic film tends to adhere to acid components in the air, and as a result, odor resistance tends to be decreased. A more preferable range of the acid value is 500 - 800 mgKOH/g.

A weight average molecular weight of the (meth)acrylic resin (A) is 20,000 - 2,000,000. When the weight average molecular weight of the (meth)acrylic resin (A) is less than 20,000, odor resistance tends to be decreased. When the weight average molecular weight of the (meth)acrylic resin (A) exceeds 2,000,000, viscosity of the hydrophilization treatment agent tends to be increased, and as a result, a working property tends to be impaired.

When the weight average molecular weight of the (meth)acrylic resin (A) is low, the (meth)acrylic resin (A) existing near the boundary to the metal surface tends to be transferred to the surface side of the hydrophilic film, when moisture contacts with the hydrophilic film. When the (meth)acrylic resin (A) is transferred to the surface side of the hydrophilic film, the hydrophilic film tends to adhere to acid components in the air, and the acid components may tend to be condensed, and as a result, the problem of odors may occur by the acid components. In particular, when the hydrophilic film is in contact with water for a long time, this problem of odors is thought to occur.

Further, when the weight average molecular weight is too low, it is thought that adhesion between the hydrophilic film and the metal surface tends to be decreased due to elution into water. When the weight average molecular weight of the (meth)acrylic resin (A) is in the above-described range, even when a state such that water adheres to the surface of the hydrophilic film continues, the (meth)acrylic resin (A) is hardly transferred to the surface side of the hydrophilic film, and the problem of decreased adhesion between the hydrophilic film and the metal surface does not occur. A more preferable range of the weight average molecular weight of the (meth)acrylic resin (A) is 20,000 - 100,000.

Meanwhile, as a value of a weight average molecular weight, a value measured by a gel permeation chromatography (GPC) method is employed. Specifically, the weight-average molecular weight is measured with GPC of Model LC-08 (A-5432) manufactured by Japan Analytical Industry Co., Ltd. using a solution prepared by dissolving 0.4 part by weight of a resin sample based on 100 parts by mass of tetrahydrofuran as a sample solution, and calculated in terms of polystyrene.

Polyvinyl alcohol (B) contained in the hydrophilization treatment agent can be obtained by saponificating a polymer produced by polymerizing polyvinyl acetate. In the present invention, a degree of polymerization of polyvinyl alcohol (B) is not particularly limited, but it is preferable that the degree of polymerization is 300 - 2,000. In addition, it is preferable that a degree of saponification of polyvinyl alcohol (B) is 95% or more.

A content rate of the solid component of polyvinyl alcohol (B) in the total solid component of the hydrophilization treatment agent is 10 - 40 mass%. When the above-described content rate is less than 10 mass%, water resistance tends to be decreased. When the above-described content rate exceeds 40 mass%, hydrophilicity tends to be decreased. It is preferable that the above-described content rate is 15 - 25 mass%.

At least one resin selected from polyethylene oxide and polyethylene glycol (C) contained in the hydrophilization treatment agent is a component which imparts lubricity to the hydrophilic film. By imparting lubricity to the hydrophilic film, processability is improved when the surface of the aluminum fin material is subjected to press working and the like.

A content rate of the solid component of at least one resin selected from polyethylene oxide and polyethylene glycol (C) in the solid components of the hydrophilization treatment agent is 10 - 50 mass%. When the above-described content is less than 10 mass%, processability tends to be decreased. When the above-described content exceeds 50 mass%, components of the film tends to be eluted into water. The above-described content rate is preferably 20 - 40 mass%.

### [Crosslinkable fine particles]

Crosslinkable fine particles (D) according to the present invention are resin particles composed of a copolymer obtained by copolymerizing monomer components including a monomer (a) represented by the following formula (I), a monomer (b) having a polyoxyalkylene chain and a polymerizable double bond, and another polymerizable monomer (c). In the above-described crosslinkable fine particles (D), a methylol group and an ethylol group on the above-described (a) and a functional group such as a carboxyl group, a hydroxy group on the above-described (b) may react, a methylol group and an ethylol group may undergo a condensation reaction each other, or a methylol group and an ethylol group on the above-described (a) and a carboxyl group and a hydroxy group on the above-described (c) may react. Accordingly, when the above-described crosslinkable fine particles (D) are used as components of the hydrophilization treatment agent, a water-insoluble robust hydrophilic film can be formed on a metal surface. In addition, the above-described crosslinkable fine particles (D) are highly hydrophilic, and have relatively many unreacted functional groups, and therefore, when the crosslinkable fine particles (D) are used as components of the hydrophilization treatment agent, crosslinkable fine particles (D) react with other hydrophilic resins without impairing hydrophilicity, and durability of hydrophilicity may be markedly increased after a contaminant adheres to the film. Further, the above-described crosslinkable fine particles (D) have a relatively low swelling ratio against water, and therefore, dissolution of the formed hydrophilic film into water is also suppressed.

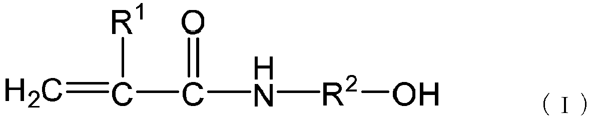

The monomer (a) represented by the above-described formula (I) is N-methylolacrylamide, N-methylol methacrylamide, N-hydroxyethyl acrylamide or N-hydroxyethyl methacrylamide. By using the hydrophilization treatment agent which contains the crosslinkable fine particles (D) obtained by using the monomer (a) represented by the above-described formula (I), a hydrophilic film which is excellent in the above-described durability of hydrophilicity and in the above-described adhesion can be formed. They may be used alone, or in combination of two or more.

The above-described crosslinkable fine particles (D) can be obtained by copolymerizing monomer components which contain 30 - 95 mass% of the monomer (a) represented by the above-described formula (I). When the content of the monomer (a) is less than 30 mass%, durability of hydrophilicity of the hydrophilic film after a contaminant adheres to the film tends to be decreased. When the content of the monomer (a) exceeds 95 mass%, the manufacturing tends to be difficult. Since the monomer (a) represented by the above-described formula (I) is admixed in the above-described range, the monomer (a) acts both as a crosslinking component and as a major component in the components constituting the hydrophilic film. Namely, when the monomer (a) is admixed for expressing only a function as a crosslinking component, generally, the amount of the monomer (a) is smaller than the above-described range. However, in the crosslinkable fine particles (D) according to the present invention, by admixing the monomer (a) represented by the above-described formula (I) within the above-described range, methylol groups and ethylol groups remain in the crosslinkable fine particles even after copolymerization. Accordingly, when a hydrophilic film is formed by using a hydrophilization treatment agent which contains the above-described crosslinkable fine particles (D), the film can react with other hydrophilic resins and then robust adhesion and durability of hydrophilicity can be obtained. As a result, even after lubricants for plastics such as palmitic acid, stearic acid, paraffin acid, and contaminants such as diisooctyl phthalate adhere to thus formed hydrophilic film, hydrophilicity of the hydrophilic film can be sufficiently sustained.

Further, a degree of crosslinking of the crosslinkable fine particles obtained by admixing the monomer (a) represented by the above-described formula (I) is increased when the admixed amount of the monomer (a) increases. Accordingly, dissolution of thus formed hydrophilic film due to moisture is suppressed, and therefore, the film exhibiting excellent adhesion (adhesion in the case when the film is exposed to moisture) can be formed.

An admixed amount of the monomer (a) represented by the above-described formula (I) is preferably 30 - 90 mass% based on 100 mass% of the monomer components. The above-described lower limit is more preferably 40 mass%, and the above-described upper limit is more preferably 80 mass%.

The above-described monomer (b) is not particularly limited, as long as it is a monomer having a polyoxyalkylene chain and a polymerizable double bond, however it is preferably a compound represented by the following formula (II) and/or the following formula (III). By using such a monomer, crosslinkable fine particles which have dispersion stability in water and excellent hydrophilicity can be obtained.

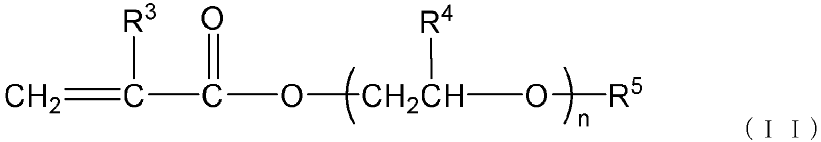

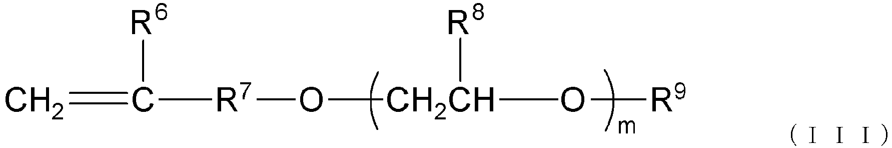

In the above-described formula (II), the above-described R³ and the above-described R⁴ may be the same or different, and represent a hydrogen atom or a methyl group. The above-described R⁵ represents a hydrogen atom, a methyl group, SO₃H, SO₃Na or SO₃NH₄.

In the above-described formula (II), n represents an integer of 6 - 300. When n is less than 6, dispersion stability and hydrophilicity tend to be insufficient, and when n exceeds 300, the manufacturing tends to be difficult. It is preferable that the above-described lower limit is 30 and that the above-described upper limit is 200.

In the above-described formula (III), the above-described R⁶ and the above-described R⁸ may be the same or different, and represent a hydrogen atom or a methyl group. The above-described R⁹ represents a hydrogen atom, a methyl group, SO₃H, SO₃Na or SO₃NH₄. The above-described R⁷ represents CH₂ or a benzene ring (the following chemical formula

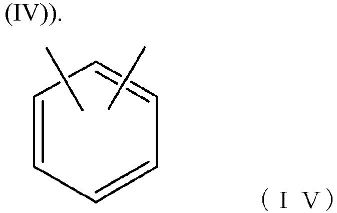

In the above-described formula (III), m represents an integer of 6 - 300. When m is less than 6, dispersion stability and hydrophilicity tend to be insufficient, and when m exceeds 300, the manufacturing tends to be difficult. It is preferable that the above-described lower limit is 30 and that the above-described upper limit is 200.

The above-described monomer (b) is not particularly limited, and examples of the above-described monomer (b) include, for example, methoxy polyethylene glycol monomethacrylate, methoxy polyethylene glycol monoacrylate, octoxy polyethylene glycol-polypropylene glycol monoacrylate; in addition to a compound represented by the above-described formula (II) or the above-described formula (III). They may be used alone, or in combination of two or more.

It is preferable that the above-described monomer (b) is a compound containing a polyoxyalkylene chain in an amount of 50 mass% or more. In this regard, 50 mass% or more means that the mass of the total solid components of a portion of a polyoxyalkylene chain is in an amount of 50 mass% or more in 100 mass% of the mass of the solid components of the monomer (b) used. When the monomer (b) is a compound containing a polyoxyalkylene chain in an amount less than 50 mass%, hydrophilicity of a hydrophilic film tends to be decreased. It is more preferable that the above-described monomer (b) contains a polyoxyalkylene chain in an amount of 80 - 99 mass%.

An amount of the above-described monomer (b) admixed is 5 - 60 mass% based on 100 mass% of the monomer components. When an amount of the above-described monomer (b) admixed is less than 5 mass%, dispersibility of crosslinkable fine particles in a hydrophilization treatment agent tends to be decreased, and hydrophilicity of the hydrophilic film tends to be decreased. When an amount of the above-described monomer (b) admixed exceeds 60 mass%, adhesion of a hydrophilic film tends to be insufficient and durability of hydrophilicity after a contaminant adheres to the film tends to be decreased. It is preferable that the above-described lower limit is 10 mass% and that the above-described upper limit is 40 mass%.

The above-described another polymerizable monomer (c) is not particularly limited, as long as it is a compound which contains a polymerizable unsaturated bond per a molecule and which can copolymerize with the monomer (a) represented by the above-described formula (I) and the above-described monomer (b). Examples of the another polymerizable monomer (c) include, for example, acrylic acid, methacrylic acid, itaconic acid, maleic acid, a vinyl monomer such as a vinyl acetate group, acrylic acid 2-hydroxyethyl ester, acrylic acid hydroxypropyl, N-vinylacetamide, N-vinylformamide, N-vinylpyrrolidone, N-vinylimidazole, acrylonitrile, methyl acrylate, methyl methacrylate, styrene, an unsaturated double bond-containing surfactant, acrylamide, methacrylamide, N-methylacrylamide, N-vinylsulfonic acid, N-allyl sulfonic acid, sodium styrene sulfonate , 2-acrylamide-2-methylpropanesulfonic acid. In addition, an unsaturated monomer used for general radical polymerization can also be used, such as methyl acrylate, acrylate ester other than methyl methacrylate , and a methacrylate ester. Among them, acrylic acid and methacrylic acid are preferable because they can improve hydrophilicity of the resulting crosslinkable fine particles. They may be used alone, or in combination of two or more.

An amount of the above-described another polymerizable monomer (c) admixed is from the lower limit of 0 mass% to 50 mass% based on 100 mass% of monomer components. When the amount of the above-described another polymerizable monomer (c) admixed exceeds 50 mass%, hydrophilicity and crosslinkability of the resulting crosslinkable fine particles (D) tend to be decreased, and durability of hydrophilicity of a hydrophilic film after a contaminant adheres to the film tends to be decreased. It is preferable that the above-described upper limit is 30 mass%.

It is preferable that a water swelling ratio of crosslinkable fine particles (D) according to the present invention is 1.0 - 1.5. With this configuration, when a hydrophilic film is formed, the decrease in adhesion between the hydrophilic film and a metal surface is suppressed even after the hydrophilic film is exposed to moisture. A water swelling ratio of 1.5 or less can be obtained by appropriately setting a reaction condition with employing the above-described compounding ratios of the monomer (a) represented by the above-described formula (I), the above-described monomer (b) and the above-described another polymerizable monomer (c). It is more preferable that the above-described water swelling ratio is 1.0 - 1.3. In the present specification, a water swelling ratio is a value calculated by the following equation: a water swelling ratio = a particle diameter in an aqueous solution / a particle diameter in a solvent. In addition, a particle diameter (D₅₀) is a value measured by using an electrophoretic light scattering photometer, Photal ELS-800 (manufactured by OTSUKA

### ELECTRONICS CO. LTD.).

The crosslinkable fine particles (D) according to the present invention can be manufactured by polymerizing, for example, 30 - 95 mass% of the above-described N-methylol (meth)acrylamide (a), 5 - 60 mass% of the above-described monomer (b) having a polyoxyalkylene chain and a polymerizable double bond and 0 - 50 mass% of the above-described another polymerizable monomer (c) in the absence of a dispersion stabilizer and in a water miscible organic solvent which dissolve monomers used but does not substantially dissolve the resulting copolymer, or water miscible organic solvent / water mixed solvent,.

In polymerization in preparing the above-described crosslinkable fine particles (D), a dispersing agent may be used together. Examples of the above-described dispersing agent include, for example, a dispersion resin such as polyvinylpyrrolidone, polyvinyl alcohol, polycarboxylic acid and a various surfactant such as an anionic surfactant, a cationic surfactant, a nonionic surfactant.

In preparing the crosslinkable fine particles (D) according to the present invention, copolymerization of monomer components composed of the above-described (a), the above-described (b) and the above-described (c) may be conducted in a solvent including an ether type solvent such as an alkylene glycol monoalkyl ether (for example, ethylene glycol monobutyl ether) methoxypropanol, a mixed solvent of the above solvent and water.

The copolymerization of monomer components composed of the above-described (a), the above-described (b) and the above-described (c) is generally conducted in the presence of a radical polymerization initiator. The above-described radical polymerization initiator is not particularly limited, and all of the commonly used radical polymerization initiators can be used. Examples of the radical polymerization initiator include, for example, a peroxide such as benzoyl peroxide, lauroyl peroxide, di-t-butyl peroxide, cumene hydroperoxide, t-butyl peroctoate, t-butylperoxy-2-ethylhexanoate; an azo compound such as 2,2'-azobisisobutyronitrile, 2,2'-azobis(2,4-dimethylvaleronitrile), 2,2'-azobis(4-methoxy-2,4-dimethylvaleronitrile), dimethyl-2,2'-azo-bis-isobutyrate, 4,4'-azobis(4-cyanopentanoic acid); an amidine compound such as 2,2'-azobis(2-amidinopropane)dihydrochloride, 2,2'-azobis-(N-N'-dimethylene isobutyl amidine), 2,2'-azobis-(N-N'-dimethylene isobutyl amidine) dihydrochloride; a persulfide type initiator such as potassium persulfate, ammonium persulfate or a system in which a persulfide type initiator and sodium thiosulfate, an amine are used together. They may be used alone, or in combination of two or more. Generally, the amount of the radical polymerization initiator used can be in a range of 0.2 - 5 mass% based on the total amount of monomers.

A polymerization temperature in the above-described copolymerization may be varied depending on the type of a polymerization initiator used, and generally, it is appropriate that the polymerization temperature is a temperature in a range of 70 - 140°C. When the polymerization temperature is lower than 70°C, crosslinkability tends to be insufficient and when the polymerization temperature exceeds 140°C, the control of reaction tends to be difficult. It is more preferable that the above-described lower limit is 90°C and that the above-described upper limit is 120°C. A reaction time is generally 0.2 - 5 hours. When the reaction time is shorter than 0.2 hour, crosslinkability tends to be insufficient and when the reaction time exceeds 5 hours, reactivity remains unchanged and tends to be disadvantageous in terms of cost. When the polymerization temperature is 90°C or higher, a crosslinking reaction within particles can be made to proceed. When the polymerization temperature is lower than 70°C, generally, a crosslinking reaction within particles in polymerization tends to hardly proceed, and therefore, generally, after the polymerization reaction, a procedure, which comprises heating the prepared polymer at a temperature of 90°C or higher for 0.2 - 5 hours, is conducted such that the crosslinking reaction within particles proceeds.

In addition, if necessary, a catalyst for a crosslinking reaction may be added to a polymerization reaction system in order to make the crosslinking reaction within particles of polymer particles proceed more rapidly during the polymerization reaction or after the polymerization reaction. Examples of the above-described catalyst for a crosslinking reaction include, for example, a strong acid catalyst such as dodecylbenzenesulfonic acid, paratoluensulfonic acid; a strong acid catalyst containing a polymerizable double bond such as sulfoethyl methacrylate.

A volume average particle diameter of the crosslinkable fine particles obtained as described above is not particularly limited, and the volume average particle diameter is generally in a range of 0.03 - 1 µm, and preferably in a range of 0.05 - 0.6 µm in terms of stability of the crosslinkable fine particles.

A hydrophilization treatment agent containing the above-described crosslinkable fine particles and hydrophilic resins is able to form a hydrophilic film which exhibits excellent durability of hydrophilicity and which exhibits excellent adhesion. When the above-described hydrophilization treatment agent is used on a surface of a metal, in particular, of aluminum or an alloy thereof, the hydrophilization treatment agent is able to form a hydrophilic film excellent in durability of hydrophilicity and in adhesion.

A content of the crosslinkable fine particles (D) in the total solid component of a hydrophilization treatment agent is 30 - 50 mass%. When the content is less than 30 mass%, hydrophilicity and contamination resistance tend to be decreased. On the other hand, when the content exceeds 50 mass%, an effect which exceeds a desired effect cannot be achieved, and it is disadvantageous in terms of cost.

### [Unsaturated Polymerizable Compound]

The hydrophilization treatment agent according to the present invention includes the above-described components as essential components, but may also include an unsaturated polymerizable compound (E) having at least one functional group selected from a hydroxy group and an amide group, as other components. It is required that a content rate of the solid component of the unsaturated polymerizable compound (E) in the solid component of the hydrophilization treatment agent is 10 mass% or less. The unsaturated polymerizable compound having the above-described functional group acts as a curing agent and can further improve crosslinkability of the hydrophilic film. When the above-described content exceeds 10 mass%, a problem of odors tends to be difficult to be suppressed. It is thought that when the unsaturated polymerizable compound (E) having the above-described functional group remains itself in the hydrophilic film, the hydrophilic film tends to adhere to acid components in the air and the acid components tend to be condensed, and then, the above-described problem regarding odors tends to be unable to be solved.

Examples of an unsaturated polymerizable compound having a hydroxy group include, methacrylic acid 2-hydroxyethyl, methacrylic acid 2-hydroxypropyl, 2-hydroxyethyl acrylate. Examples of an unsaturated polymerizable compound having an amide group include, acrylamide, dimethylacrylamide, dimethylaminopropylacryl amide, isopropylacrylamide, diethylacrylamide, hydroxyethylacrylamide, N-methylolacrylamide.

### [Other Components]

A pigment may be added to the above-described hydrophilization treatment agent in order to form a colored hydrophilic film. A pigment to be added is not particularly limited, and a commonly used color pigment such as an inorganic pigment, an organic pigment may be used.

To the above-described hydrophilization treatment agent, a required amount of the following other components may be added, depending on the additionally desired function. Examples of other components include, for example, a hydrophilic additive such as a surfactant, colloidal silica, titanium oxide, saccharides; a rust preventive additive such as tannic acid, imidazoles, triazines, triazoles, guanines, hydrazines, a phenol resin, a zirconium compound, a silane coupling agent; a crosslinking agent such as a melamine resin, an epoxy resin, a blocked isocyanate, an amine, a phenol resin, silica, aluminum, zirconium; an antimicrobial agent, a dispersing agent, a lubricant, a deodorant, a solvent.

### [Method for Surface Treatment of Heat Exchanger]

By using the method for surface treatment according to the present invention, a hydrophilic film, which is excellent in hydrophilicity, in particular, in durability of hydrophilicity after a contaminant adheres to the film and which is also excellent in adhesion and which does not cause a problem of odors upon use, can be formed. In particular, the method for surface treatment according to the present invention is a method which may be suitably applied to aluminum or its alloys. Meanwhile, since the above-described effects can be exhibited by using the above-described specific hydrophilization treatment agent, as a method for forming a hydrophilic film, a conventional method may be employed.

In a common method for surface treatment of a heat exchanger, generally, first of all, a metal plate made of aluminum or an aluminum alloy is subjected to degreasing treatment. Next, a chemical conversion treatment agent is brought into contact with the plate to form a chemical conversion film, and further a hydrophilization treatment agent is brought into contact with the chemical conversion film obtained by the above-described step to form a hydrophilic film. If necessary, a corrosion resistant resin primer may be applied to the chemical conversion film, and the chemical conversion film to which the primer is applied may be brought into contact with a hydrophilization treatment agent to form a hydrophilic film.

The above-described degreasing treatment may be any alkaline degreasing treatment using an alkaline solution such as sodium hydroxide, sodium carbonate, sodium silicate, sodium phosphate. In addition, examples of the above-described chemical conversion treatment include, phosphoric chromate treatment, coating type chromate treatment, non-chromate treatment and the like. The above-described phosphoric chromate treatment can be conducted by using a treatment liquid containing chromic anhydride and phosphoric acid added with an additive. The above-described phosphoric chromate treatment can by conducted by soaking in a treatment liquid, spraying a treatment liquid and the like. Examples of the above-described corrosion resistant resin primer include, acrylic, epoxy-based, polyester-based, phenol-based and urethane-based resin primer treatments.

It is preferable that a chromium content in a chemical conversion film obtained by the above-described phosphoric chromate treatment is 3 - 50 mg/m² in terms of Cr. When the chromium content is less than 3 mg/m², rust resistance tends to be insufficient, and when the chromium content exceeds 50 mg/m², a reaction with the hydrophilic film tends to occur, which may lead to decreased hydrophilicity. A metal such as aluminum or an aluminum alloy on which a chemical conversion film is formed is generally washed with water. It is preferable that this water washing is conducted for about 10 to 30 seconds.

A treatment agent used for the above-described coating type chromate treatment is a chromate treatment agent for coating treatment conducted by using a roll coater and the like. In this case, it is preferable that a chromium content in the film is 5 - 30 mg/m² in terms of Cr.

A treatment agent used for the above-described non-chromate treatment is a treatment agent which does not contain chromium, and examples of the treatment agent include, for example, a zirconium-based treatment agent. Examples of the above-described zirconium-based treatment agent include a mixture of polyacrylic acid and zircon fluoride and the like.

It is preferable that a zirconium content in a film obtained by using the above-described zirconium-based treatment agent is 0.1 - 40 mg/m² in terms of Zr. When the zirconium content is less than 0.1 mg/m², corrosion resistance tends to be insufficient and even when the zirconium content exceeds 40 mg/m², it tends to be uneconomical. When the zirconium-based treatment is conducted after the chromate treatment, greater effects can be exhibited.

As pretreatments in the method for surface treatment according to the present invention, generally, the above-described degreasing treatment and the above-described chemical conversion treatment are conducted, and if necessary, primer treatment is conducted after chemical conversion treatment.

The method for surface treatment according to the present invention includes an application step of the above-described hydrophilization treatment agent on a metal surface of aluminum or an aluminum alloy on which the above-described chemical conversion treatment has been conducted. Examples of the application method include, a roll coat method, a bar-coating method, a soaking method, a spray coat method, a brush coating method. It is preferable that drying and baking are conducted, after the application, at a temperature of 120 - 300°C for 3 seconds to 60 minutes to obtain the hydrophilic film. When a baking temperature is lower than 120°C, film formation tends to be insufficient, and there is a possibility of dissolution of the film after being soaked in water. When a baking temperature exceeds 300°C, a resin tends to be decomposed, and there is a possibility of impairing hydrophilicity of the hydrophilic film.

A hydrophilic film formed by the above-described method for surface treatment is a film which is formed on a surface of a metal, in particular, on aluminum or its alloy, and which exhibits excellent hydrophilicity, in particular, excellent durability of hydrophilicity after a contaminant adheres to the film, as well as excellent adhesion.

A film thickness of the above-described hydrophilic film is, preferably 0.05 g/m² or more, and more preferably 0.1 - 2 g/m². When a film thickness of the film is less than 0.05 g/m², durability of hydrophilicity and processability of the film tend to be insufficient.

### EXAMPLES

Hereinafter, the present invention will be described in more details by referring to Examples, but the present invention is not limited only to these Examples.

### Materials

PAA1: polyacrylic acid (weight average molecular weight: 20,000, acid value: 780 mgKOH/g)
PAA2: polyacrylic acid (weight average molecular weight: 60,000, acid value: 780 mgKOH/g)
PAA3: polyacrylic acid (weight average molecular weight: 2,000,000, acid value: 780 mgKOH/g)
PAA4: polyacrylic acid (weight average molecular weight: 6,000, acid value: 780 mgKOH/g)
PAA-HEMA: a copolymer of polyacrylic acid and hydroxyethyl methacrylate (weight average molecular weight: 400,000, acid value: 400 mgKOH/g)
MAA-AAm1: a copolymer of polymethacrylic acid and acrylamide (weight average molecular weight: 20,000, acid value: 200 mgKOH/g)
MAA-AAm2: a copolymer of polymethacrylic acid and acrylamide (weight average molecular weight: 20,000, acid value: 40 mgKOH/g)
MAA: polymethacrylic acid (weight average molecular weight: 60,000, acid value: 651 mgKOH/g)
PVA: polyvinyl alcohol (weight average molecular weight: 20,000, degree of saponification : 98.5)
PEO: polyethylene oxide (weight average molecular weight: 250,000)
PEG: polyethylene glycol (weight average molecular weight: 20,000)
Resin particles: crosslinkable fine particles (manufacturing method is described below)
Polyacrylic Acid/Sulfonic Acid: "Aron A-6020 (TOAGOSEI CO., LTD.)"
Polyacrylamide: "PAA15-C (Nitto Boseki Co. Ltd.)"
N-MAM: N-methylolacrylamide "N-MAM P (Soken Chemical & Engineering Co., Ltd.)"

### [Method for Manufacturing Crosslinkable fine particles]

A monomer solution in which 60 parts by mass of N-methylolacrylamide, 20 parts by mass of methoxy polyethylene glycol monomethacrylate (a polyethylene chain of which the number of a repeating unit is 100), 10 parts by mass of acrylic acid, and 10 parts by mass of acrylamide were dissolved in 200 parts by mass of methoxypropanol, and a solution in which 1 part by mass of "ACVA"(an azoic polymerization initiator manufactured by Otsuka Chemical Co., Ltd.) was dissolved in 50 parts by mass of methoxypropanol, were added dropwise to 150 parts by mass of methoxypropanol over 3 hours under a nitrogen atmosphere at 105°C, from separate inlets respectively, and the mixture was subjected to polymerization by heating for further 1 hour under stirring. In the resulting dispersion liquid, crosslinkable fine particles had a mean particle diameter of 350 nm, a water swelling ratio of 1.15, a viscosity measured by Ford Cup No.4. of 18 seconds, and a concentration of solid components of 20 mass%.

### Preparation of Hydrophilization Treatment Agent

Components shown in Table 1 were mixed in such a manner that ratios of components were those shown in the Table 1 (mass ratios in solid components of hydrophilization treatment agents) to prepare hydrophilization treatment agents used for Examples and those for Comparative Examples.

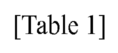

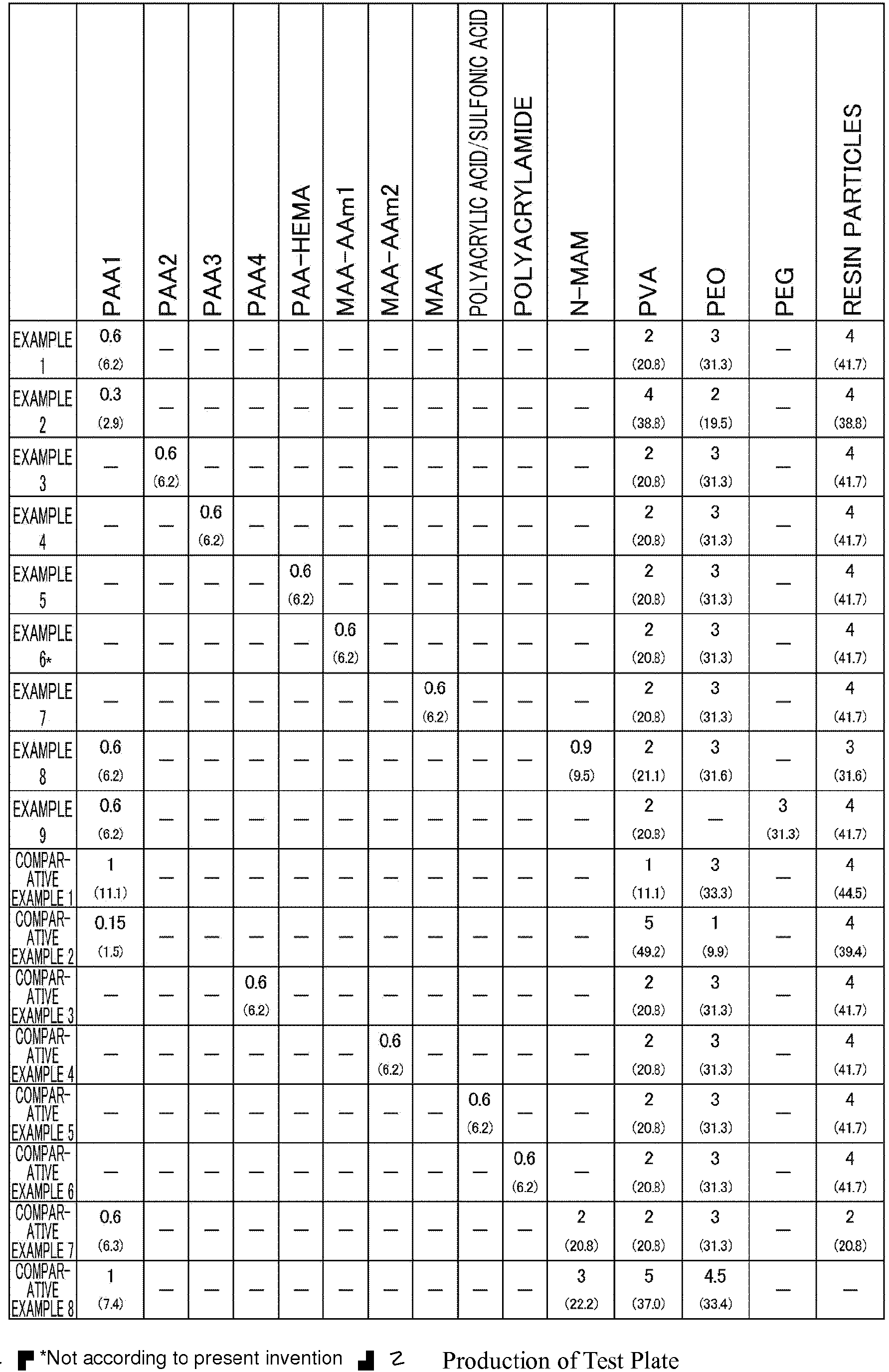

An aluminum material made of "1000-Series Aluminum" with a size of 150 mm × 200 mm × 0.13 mm was degreased at 70°C for 5 seconds by using 1% solution of SURFCLEANER EC370 manufactured by NIPPON PAINT Co., Ltd., and then the aluminum material was subjected to phosphoric chromate treatment at 40°C for 5 seconds by using 10% solution of ALSURF 407/47 manufactured by NIPPON PAINT Co., Ltd. Then, a solid components of each of the hydrophilization treatment agents obtained as described above was adjusted to 5%, and it was applied on the above-described aluminum material by using a bar coater #4, and then it was heated at 220°C for 20 seconds to be dried and cured to produce a test plate. The test plate was used for the following evaluation.

### Evaluation of Acetic Acid Odor

The test plate was soaked in pure water for 1 hour, and then 0.5 g of acetic acid was poured in the container and the test plate was subjected to contamination at room temperature for 72 hours. Thereafter, the test plate was left to stand in the air, and after 5 hours, odor was evaluated by the following evaluation criteria. The evaluation result was a mean value of evaluations conducted by two evaluators. When the value of odor is 1 or less, deodorant performance against acetic acid is evaluated to be good. The results of measurements are shown in Table 2 (the item "Acetic acid odor" on Table 2).

### (Evaluation Criteria)

- 0;: No odor.
- 1;: Very weak odor was perceived.
- 2;: Odor was perceived easily.
- 3;: Odor was perceived.
- 4;: Strong odor was perceived.
- 5;: Very strong odor was perceived.

### Evaluation of Durability of Hydrophilicity

The test plate was soaked in pure water for 240 hours, and then a contact angle with a water droplet was evaluated. The measurement of contact angle was conducted by using a FACE automatic contact angle meter "CA-Z" (manufactured by Kyowa Interface Science Co., LTD.). The contact angle was defined as a contact angle with a water droplet measured under a condition at room temperature and 30 seconds after dropping. The smaller the contact angle is, the higher the hydrophilicity is, and when a contact angle is 30° or less, hydrophilicity is evaluated to be good. The results of measurements are shown in Table 2 (the item "Contact Angle" on Table 2).

### Evaluation of Durability of Hydrophilicity after an Adhesion of the Contaminant

The test plate was soaked in water flow of tap water (water flow was 15 kg/hour) for 30 minutes, and then the test plate was pulled up and was dried. Three parts by mass of stearic acid, 3 parts by mass of 1-octadecanol, 3 parts by mass of palmitic acid, and 3 parts by mass of bis(2-ethylhexyl) phthalate were put into a container and the mixture was heated at 150°C and was vaporized. The test plate was left to stand in the container for 8 hours. After repeating this cycle 20 times, an area wet by water after being soaked in tap water and being pulled up was evaluated as wettability. When wettability is 95% or more, the wettability is evaluated to be good. The evaluation results are shown in Table 2 (the item "Wettability" on Table 2).

### WET Adhesion

Pure water was sprayed on the test plate, and the test plate was rubbed softly with a finger. One reciprocating motion of the finger was taken as one time, and the number of times on which a hydrophilic film was peeled off was evaluated. When the number of times is 20 or more, WET adhesion is evaluated to be good. The evaluation results are shown in Table 2 (the item "WET adhesion" on Table 2).

**[Table 2]**

| | Acetic acid odor | Contact angle(°) | Evaluation of wettability (%) | WET adhesion (times) |
|---|---|---|---|---|
| Example 1 | 0.5 | 24 | >95 | >20 |
| Example 2 | 0.5 | 26 | >95 | >20 |
| Example 3 | 0.5 | 29 | >95 | >20 |
| Example 4 | 0.5 | 28 | >95 | >20 |
| Example 5 | 0.5 | 27 | >95 | >20 |
| Example 6* | 0.5 | 26 | >95 | >20 |
| Example 7 | 0.5 | 29 | >95 | >20 |
| Example 8 | 0.5 | 28 | >95 | >20 |
| Example 9 | 0.5 | 27 | >95 | >20 |
| Comparative Example 1 | 3 | 28 | >95 | >20 |
| Comparative Example 2 | 0.5 | 42 | 70 | 12 |
| Comparative Example 3 | 1.5 | 41 | 80 | 6 |
| Comparative Example 4 | 0.5 | 44 | 80 | 11 |
| Comparative Example 5 | 4 | 28 | >95 | >20 |
| Comparative Example 6 | 4 | 33 | >95 | >20 |
| Comparative Example 7 | 3 | 25 | >95 | >20 |
| Comparative Example 8 | 3 | 27 | >95 | >20 |

| | | | | |
|---|---|---|---|---|
| * Not according to present invention | | | | |

From the results of Examples 1 and 2 as well as Comparative Examples 1 and 2,
when a content rate of the solid component of a (meth)acrylic resin (A) based on the solid component of the hydrophilization treatment agent is 2 - 7 mass%, the hydrophilic film obtained exhibits excellent adhesion to a metal surface in a state that water adheres to the hydrophilic film and exhibits excellent durability of hydrophilicity in a state that a contaminant adheres to the film and does not emit a problematic odor even when it is brought into contact with the air.

From the results of Examples 3 and 4 as well as Comparative Example 3, when a weight average molecular weight of a (meth)acrylic resin (A) is in a range of 20,000 - 2,000,000, the hydrophilic film obtained does not exhibit decreased adhesion to a metal surface in a state that water adheres to the hydrophilic film, and does not exhibit decreased durability of hydrophilicity in a state that a contaminant adheres to the film, even though the problem of odors is solved.

From the results of Examples 5 and 6 as well as Comparative Example 4, when an acid value of a (meth)acrylic resin is too low, the hydrophilic film obtained exhibits decreased adhesion to a metal surface in a state that water adheres to the hydrophilic film and exhibits decreased durability of hydrophilicity in a state that a contaminant adheres to the film.

From the results of Comparative Examples 5 and 6, it was confirmed that when a (meth)acrylic resin contains a repeating unit derived from a monomer having a sulfo group or a repeating unit derived from a monomer having an amide group, the problem of odors cannot be solved.

From the results of Example 8 and Comparative Example 7, it was confirmed that when a content rate of the solid component of an unsaturated polymerizable compound having at least one functional group selected from a hydroxy group and an amide group based on the solid component of the hydrophilization treatment agent is too high, the problem of odors cannot be solved.

From the result of Example 9, it was confirmed that the effects of the present invention can be exhibited even when polyethylene glycol is used instead of polyethylene oxide.

From the result of Comparative Example 8, it was confirmed that when a hydrophilization treatment agent does not contain crosslinkable fine particles, the effects of the present invention cannot be exhibited.

### INDUSTRIAL APPLICABILITY

According to the method for surface treatment of the present invention, a hydrophilic film, which exhibits excellent adhesion to a metal surface in a state that water adheres to the film and which exhibits excellent durability of hydrophilicity in a state that a contaminant adheres to the film and which does not emit a problematic odor even when the film is brought into contact with the air, can be formed on a metal surface. Accordingly, the method for surface treatment according to the present invention can be preferably used as a method for forming a hydrophilic film on a surface of a fin in a heat exchanger such as an air conditioner.

## Claims

1. A method for covering an aluminum fin material with a hydrophilic film that is a method for surface treatment of an aluminum heat exchanger, comprising:
bringing a surface of the aluminum fin material used for the aluminum heat exchanger into contact with a chemical conversion treatment agent to form a chemical conversion film; and
bringing thus obtained chemical conversion film into contact with a hydrophilization treatment agent to form the hydrophilic film, wherein,
the hydrophilization treatment agent includes:
a (meth)acrylic resin (A) including a repeating unit derived from an acrylic acid monomer and/or a repeating unit derived from a methacrylic acid monomer;
polyvinyl alcohol (B);
at least one resin selected from polyethylene oxide and polyethylene glycol (C); and
crosslinkable fine particles (D),
wherein the (meth)acrylic resin (A):
(1) does not include a repeating unit derived from a monomer having a sulfo group or a repeating unit derived from a monomer having an amide group;
(2) has a weight average molecular weight of 20,000 - 2,000,000; and
(3) has an acid value of the solid component of the resin of 100 - 800 mg KOH/g, wherein the crosslinkable fine particles (D) are obtained by copolymerizing 30 - 95 mass% of a monomer (a) represented by the following formula (I), 5 - 60 mass% of a monomer (b) having a polyoxyalkylene chain and a polymerizable double bond, and 0 - 50 mass% of another polymerizable monomer (c), 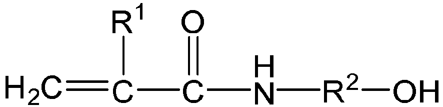
(wherein, R¹ represents a hydrogen atom or a methyl group,
R² represents CH₂ or C₂H₄),
wherein a content rate of a solid component of the (meth)acrylic resin (A) is 2 - 7 mass%, a content rate of a solid component of the polyvinyl alcohol (B) is 10 - 40 mass%, at least one resin selected from polyethylene oxide and polyethylene glycol (C) is 10 - 50 mass%, and crosslinkable fine particles (D) are 30 - 50 mass%, in the solid component of the hydrophilization treatment agent, and
wherein a content rate of the solid component of an unsaturated polymerizable compound (E) having at least one functional group selected from a hydroxy group and an amide group is 0 - 10 mass%, in the solid component of the hydrophilization treatment agent.

2. An aluminum fin material obtainable by forming a hydrophilic film on a surface thereof according to the method for covering with the hydrophilic film of claim 1.

3. An aluminum heat exchanger obtainable by using the aluminum fin material according to claim 2.

## Patentansprüche

1. Verfahren zum Bedecken eines Aluminiumrippenmaterials mit einem hydrophilen Film, bei dem es sich um ein Verfahren zur Oberflächenbehandlung eines Aluminium-Wärmetauschers handelt, umfassend:
Inkontaktbringen einer Oberfläche des für den Aluminium-Wärmetauscher verwendeten Aluminiumrippenmaterials mit einem Mittel zur Behandlung durch chemische Konversion zur Bildung eines durch chemische Konversion erhaltenen Films; und
Inkontaktbringen des so erhaltenen chemischen Konversionsfilms mit einem Mittel zur Hydrophilierungsbehandlung zur Bildung des hydrophilen Films, wobei
das Mittel zur Hydrophilierungsbehandlung Folgendes enthält:
ein (Meth)acrylharz (A) mit einer Wiederholungseinheit, die sich von einem Acrylsäure-Monomer ableitet, und/oder einer Wiederholungseinheit, die sich von einem Methacrylsäure-Monomer ableitet;
Polyvinylalkohol (B);
mindestens ein Harz, das aus Polyethylenoxid und Polyethylenglykol ausgewählt ist (C); und
vernetzbare feine Teilchen (D), wobei
das (Meth)acrylharz (A):
(1) weder eine Wiederholungseinheit, die sich von einem Monomer mit einer Sulfogruppe ableitet, noch eine Wiederholungseinheit, die sich von einem Monomer mit einer Amidgruppe ableitet, enthält;
(2) ein gewichtsmittleres Molekulargewicht von 20.000-2.000.000 aufweist; und
(3) eine Säurezahl der festen Komponente des Harzes von 100-800 mg KOH/g aufweist,
wobei
die vernetzbaren feinen Teilchen (D) durch Copolymerisieren von 30-95 Massen-% eines Monomers (a) der folgenden Formel (I), 5-60 Massen-% eines Monomers (b) mit einer Polyoxyalkylenkette und einer polymerisierbaren Doppelbindung und 0-50 Massen-% eines weiteren polymerisierbaren Monomers (c) erhalten werden, 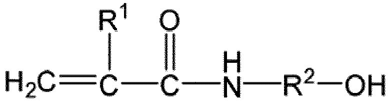 (wobei R¹ für ein Wasserstoffatom oder eine Methylgruppe steht, R² für CH₂ oder C₂H₄ steht, wobei
in der festen Komponente des Mittels für die Hydrophilierungsbehandlung ein Gehaltsanteil einer festen Komponente des (Meth)acrylharzes (A) 2-7 Massen-% beträgt, ein Gehaltsanteil einer festen Komponente des Polyvinylalkohols (B) 10-40 Massen-% beträgt, mindestens ein aus Polyethylenoxid und Polyethylenglykol ausgewähltes Harz (C) 10-50 Massen-% beträgt und vernetzbare feine Teilchen (D) 30-50 Massen-% betragen und wobei
in der festen Komponente des Mittels für die Hydrophilierungsbehandlung ein Gehaltsanteil der festen Komponente einer ungesättigten polymerisierbaren Verbindung (E) mit mindestens einer funktionellen Gruppe, die aus einer Hydroxygruppe und einer Amidgruppe ausgewählt ist, 0-10 Massen% beträgt.

2. Aluminiumrippenmaterial, das durch Bildung eines hydrophilen Films auf einer Oberfläche davon gemäß dem Verfahren zum Bedecken mit dem hydrophilen Film nach Anspruch 1 erhältlich ist.

3. Aluminium-Wärmetauscher, der durch Verwendung des Aluminiumrippenmaterials gemäß Anspruch 2 erhältlich ist.

## Revendications

1. Procédé pour le recouvrement d'un matériau d'ailette en aluminium avec un film hydrophile qui est un procédé pour le traitement de surface d'un échangeur de chaleur en aluminium, comprenant :
la mise en contact d'une surface du matériau d'ailette en aluminium utilisé pour l'échangeur de chaleur en aluminium avec un agent de traitement de conversion chimique pour former un film de conversion chimique ; et
la mise en contact du film de conversion chimique ainsi obtenu avec un agent de traitement d'hydrophilisation pour former le film hydrophile, l'agent de traitement d'hydrophilisation comprenant :
une résine (méth)acrylique (A) comprenant un motif répété issu d'un monomère acide acrylique et/ou un motif répété issu d'un monomère acide méthacrylique ;
du poly(alcool vinylique) (B) ;
au moins une résine choisie entre le poly(oxyde d'éthylène) et le polyéthylèneglycol (C) ; et
de fines particules réticulables (D),
la résine (méth)acrylique (A) :
(1) ne comprenant pas un motif répété issu d'un monomère ayant un groupe sulfo ou un motif répété issu d'un monomère ayant un groupe amide ;
(2) ayant une masse moléculaire moyenne en poids de 20 000-2 000 000 ; et
(3) ayant un indice d'acide du constituant solide de la résine de 100-800 mg de KOH/g,
les fines particules réticulables (D) étant obtenues par copolymérisation de 30-95 % en masse d'un monomère (a) représenté par la formule (I) suivante, 5-60 % en masse d'un monomère (b) ayant une chaîne polyoxyalkylène et une double liaison polymérisable et 0-50 % en masse d'un autre monomère polymérisable (c), 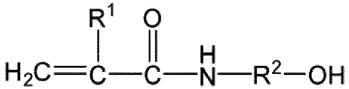 (R¹ représentant un atome d'hydrogène ou un groupe méthyle, R² représentant CH₂ ou C₂H₄)
la teneur en termes de constituant solide de la résine (méth)acrylique (A) étant de 2-7 % en masse, la teneur en termes de constituant solide du poly(alcool vinylique) (B) étant de 10-40 % en masse, au moins une résine choisie entre le poly(oxyde d'éthylène) et le polyéthylèneglycol (C) représentant 10-50 % en masse et les fines particules réticulables (D) représentant 30-50 % en masse, par rapport aux constituants solides de l'agent de traitement d'hydrophilisation et
la teneur en termes de constituant solide d'un composé polymérisable insaturé (E) ayant au moins un groupe fonctionnel choisi entre un groupe hydroxy et un groupe amide étant de 0-10 % en masse, par rapport aux constituants solides de l'agent de traitement d'hydrophilisation.

2. Matériau d'ailette en aluminium pouvant être obtenu par la formation d'un film hydrophile sur une surface de celui-ci selon le procédé pour le recouvrement avec le film hydrophile selon la revendication 1.

3. Échangeur de chaleur en aluminium pouvant être obtenu à l'aide du matériau d'ailette en aluminium selon la revendication 2.
